# EUROPÄISCHE PATENTANMELDUNG

(11) **EP 3 231 495 A1**
(43) Veröffentlichungstag der Anmeldung: **18.10.2017**
(21) Anmeldenummer: 16001644.0
(22) Anmeldetag: 26.07.2016
(51) Int. Cl.: B01D 3/32, B01D 17/02, B01D 17/04, B01D 53/18

(54) **DEKANTER-BÖDEN IM KOLONNENSUMPF ZUR ABTRENNUNG VON KOHLENWASSERSTOFFEN AUS WÄSSRIGEN LÖSUNGEN UND UMGEKEHRT**

(30) Priorität: 12.04.2016 DE 102016004434
(71) Anmelder: Linde Aktiengesellschaft, 80331 München (DE)
(72) Erfinder: Alzner, Gerhard, 81476 München (DE); Baus, Michael, 82166 Gräfelfing (DE)
(74) Vertreter: Meilinger, Claudia Sabine

(57) **Zusammenfassung**

Die Erfindung betrifft eine Waschkolonne (1) zum Waschen eines kohlenwasserstoffhaltigen Stroms (S) mittels eines wässrigen Waschmittels (W), mit: einem Mantel (10), der einen Mantelraum (M) zum Aufnehmen des kohlenwasserstoffhaltigen Stromes (S) und des Waschmittels (W), wobei sich der Mantel (10) entlang einer vertikal verlaufenden Längsachse (L) erstreckt, und einem Sumpf (11) zur Aufnahme einer bei der Wäsche entstehenden Emulsion (E) aus einer dispersen und einer kontinuierlichen Phase (KW, W). Erfindungsgemäß ist eine Mehrzahl an parallelen sowie senkrecht zur Längsachse (L) erstreckten Böden (20) zum Trennen der dispersen Phase von der kontinuierlichen Phase im Sumpf (11) angeordnet, wobei von jedem Boden (20) zumindest ein entlang der Längsachse (L) verlaufendes Rohr (21) abgeht, über das die disperse Phase vom jeweiligen Boden (20) zu einem benachbarten Boden (20) führbar ist.

## Beschreibung

Die Erfindung betrifft eine Waschkolonne zum Waschen eines kohlenwasserstoffhaltigen Stromes mit einem wässrigen Waschmittel, z.B. in Form von Wasser oder einer Lauge, sowie zum Trennen einer aus einer dispersen Phase und einer kontinuierliche Phase bestehenden Emulsion, die beim Waschen entsteht. Bei der dispersen Phase kann es sich dabei um Kohlenwasserstoffe aus dem kohlenwasserstoffhaltigen Strom handeln, wobei die kontinuierliche Phase durch das Waschmittel gebildet sein kann. Weiterhin betrifft die Erfindung ein entsprechendes Verfahren zum Waschen eines kohlenwasserstoffhaltigen Stromes mit dem besagten Waschmittel sowie zum Trennen der besagten Emulsion.

Olefine werden heute zum überwiegenden Teil durch thermische Spaltung von gasförmigen oder flüssigen Kohlenwasserstoffen in Spaltöfen erzeugt. Das Rohgas aus den Spaltöfen enthält ein großes Spektrum an Produkten (von Wasserstoff bis Öl) und wird im Zerlegungsteil der Olefinanlage in die Hauptprodukte Ethylen (C₂H₄) und Propylen (C₃H₆) sowie verschiedene Nebenprodukte getrennt. Abhängig vom kohlenwasserstoffhaltigen Einsatz (flüssig oder gasförmig), wird in der ersten Stufe dieses Trennungsablaufes das Rohgas aus den Spaltöfen in einer Ölfraktionierung und/oder einer Wasserwäsche abgekühlt. Die Wärme wird durch direkten Kontakt mit im Kreislauf geführten Pyrolyseöl- und/oder Wasserströmen aus dem Rohgas abgeführt. Infolge der Temperaturerniedrigung kondensieren schwerere Kohlenwasserstoffe aus und mischen sich mit dem Waschwasser.

Um die restlichen Kohlenwasserstoffe trennen zu können, wird der Druck des Spaltgases in einem Rohgasverdichter erhöht, wobei eine kleine Menge Pyrolysebenzin an dieser Stelle kondensiert. In diesem Teil der Anlage werden auch Sauergase (CO₂ und H₂S) in einer Laugenwäsche, die zumeist als Laugewaschkolonnen ausgeführt ist, entfernt.

Aus wirtschaftlichen Gründen wird sowohl in Wasser- als auch in Laugewäschen der größte Teil der Waschmittelmenge im Kreislauf gefahren; lediglich ein kleiner Teil wird verbraucht aus dem Sumpf abgezogen oder der Wäsche frisch zugeführt. In beiden Wäschen bilden die Waschmittel mit den Kohlenwasserstoffen Emulsionen, die einige für den Waschprozess ungünstige Eigenschaften aufweisen.

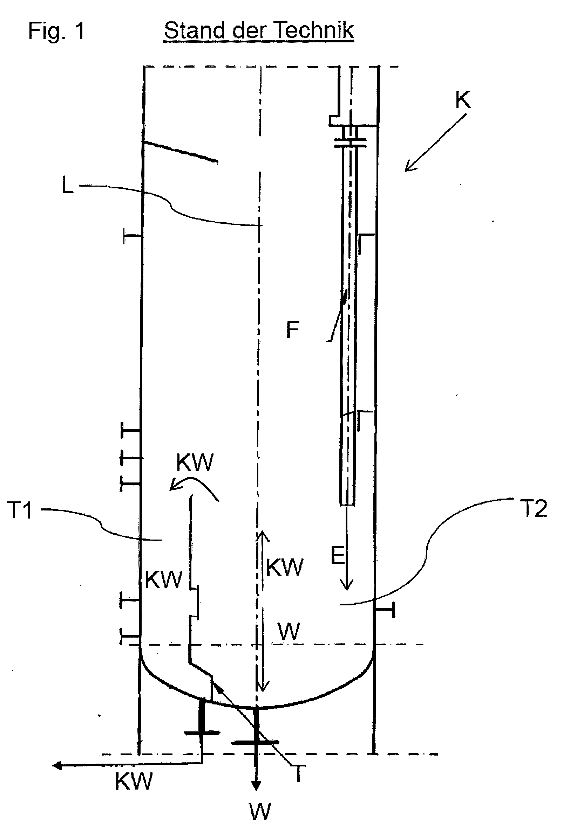

Um die schwer siedenden Kohlenwasserstoffe von den wässrigen Waschmitteln (z.B. Wasser oder Lauge) abzutrennen, wird nach dem Stand der Technik gemäß Figur 1 die zu trennende Emulsion E bzw. das mit Kohlenwasserstoffen KW beladene wässrige Waschmittel W über ein Fallrohr F in den Sumpf einer Wasser- oder einer Laugenwaschkolonne K eingeleitet, in dem ein Trennblech T senkrecht eingebaut ist, das den Sumpfraum in zwei unterschiedlich große, nebeneinander liegende Teilräume T1 und T2 trennt. Im größeren der beiden Teilräume T2, in den das beladen Waschmittel bzw. die Emulsion E, in welcher die Kohlenwasserstoffe KW als disperse Phase vorliegen, von oben einströmt, steigen die leichteren Kohlenwasserstofftröpfchen KW unter dem Einfluss der Schwerkraft nach oben auf und vereinigen sich zu einer kohlenwasserstoffreichen Schwimmschicht, während der schwerere wässrige Teil W nach unten sinkt. Über den oberen Rand des Trennblechs T strömen die aus der Emulsion abgeschiedenen Kohlenwasserstoffe KW in den kleineren Teilraum T1 und werden von dort aus der Waschkolonne K geführt. Der wässrige Anteil W der Emulsion E wird nach unten aus dem größeren Teilraum T2 abgezogen und, nach Ergänzung mit frischem Waschmittel W, z. B. zum Kopf der Waschkolonne K zurückgeleitet, wodurch der größte Teil der Waschmittelmenge im Kreislauf geführt wird.

Bedingt durch die Platzverhältnisse in einer Waschkolonne ist die Strömungsgeschwindigkeit im größeren Teilraum T2 des Kolonnensumpfes hoch und weitgehend parallel zur Längsachse L der Waschkolonne K gerichtet. Die Entmischung des Sumpfproduktes wird dadurch erschwert, dass das turbulent einströmende Flüssigkeitsgemisch E nicht ausreichend Gelegenheit hat sich zu beruhigen und die Kohlenwasserstofftröpfchen KW und der wässrige Teil W der Emulsion E sich im Wesentlichen im Gegenstrom bewegen. Durch die Turbulenzen wird die Vereinigung kleiner zu größeren Kohlenwasserstofftröpfchen (Koaleszenz) behindert. Bedingt durch die große mittlere Weglänge, den die Kohlenwasserstoffteilchen bis zur Grenze der Schwimmschicht zurückzulegen haben und die abwärts gerichtete Strömung der wässrigen Flüssigkeitsanteile W, die die Kohlenwasserstofftröpfchen KW daran hindert nach oben zu steigen, ist die tatsächliche Verweilzeit im Kolonnensumpf kurz im Vergleich mit der für eine vollständige Trennung der Flüssigphasen KW, W notwendigen Verweilzeit. Als Folge wird einerseits ein erheblicher Teil der Tröpfchen KW gemeinsam mit der wässrigen Phase W nach unten aus der Waschkolonne K ausgetragen und zum Kopf der Kolonne zurückgeführt und andererseits ein Teil des wässrigen Phase W mit den Kohlenwasserstoffen KW ausgetragen, wodurch er dem Waschprozess verloren geht und durch frisches Waschmittel ersetzt werden muss.

Durch die Kreislaufführung reichern sich die Kohlenwasserstoffe im Waschmittel an.

Insbesondere in Wasserwaschkolonnen erhöht sich mit zunehmender Kohlenwasserstoffkonzentration die Neigung zur Schaumbildung, was zu einer Verminderung der Leistung der Waschkolonne führt. In einer Laugenwäsche reagieren ungesättigte Kohlenwasserstoffe unter dem Einfluss der Laugebestandteile zu langkettigen Polymeren (basenkatalysierte Polymerisation), die sich auf den Einbauten (Böden, Füllkörper, Packungen) ablagern und dadurch ebenfalls die Waschleistung vermindern.

Aufgabe der vorliegenden Erfindung ist es daher eine Waschkolonne sowie ein entsprechendes Verfahren der eingangs genannten Art zu schaffen, die im Hinblick auf die vorgenannte Problematik verbessert sind.

Diese Aufgabe wird vorrichtungsseitig durch eine Waschkolonne mit den Merkmalen des Anspruchs 1 gelöst. Vorteilhafte Ausgestaltungen der Waschkolonne sind in den Unteransprüchen angegeben und werden nachfolgend beschrieben.

Gemäß Anspruch 1 ist eine Waschkolonne zum Waschen eines kohlenwasserstoffhaltigen Stroms mittels eines wässrigen Waschmittels, z.B. in Form von Wasser oder einer Lauge, vorgesehen, mit:
- einem Mantel, der einen Mantelraum der Kolonne zum Aufnehmen des kohlenwasserstoffhaltigen Stromes und des Waschmittels umgibt, wobei sich der Mantel entlang einer vertikal verlaufenden Längsachse erstreckt;
- einem Sumpf des Mantels zur Aufnahme einer bei der Wäsche entstehenden Emulsion aus einer dispersen und einer kontinuierlichen Phase; und
- einer Mehrzahl an parallelen Böden zum Trennen der dispersen Phase von der kontinuierlichen Phase, die im Sumpf angeordnet sind und jeweils senkrecht zur Längsachse des Mantels verlaufen, wobei von jedem Boden zumindest ein mit dem Boden verbundenes und entlang der Längsachse verlaufendes Rohr abgeht, über das die disperse Phase vom jeweiligen Boden zu einem benachbarten Boden führbar ist.

Die vorgenannten Böden werden aufgrund ihrer Funktion auch als Dekanterböden bezeichnet.

Vorzugsweise ist gemäß einer Ausführungsform vorgesehen, dass von jedem Boden mehrere jeweils mit dem Boden verbundene und entlang der Längsachse verlaufende Rohre abgehen, über die die disperse Phase vom jeweiligen Boden zu einem benachbarten Boden führbar ist.

Gemäß einer bevorzugten Ausführungsform der erfindungsgemäßen Waschkolonne sind die Böden so übereinander angeordnet, dass sie sich jeweils von einem an eine Innenseite des Mantels angrenzenden Einströmschacht zum Einströmen der Emulsion in den Sumpf der Waschkolonne zu einem gegenüberliegenden, an die Innenseite angrenzenden Abströmschacht erstrecken, so dass die Emulsion auf dem jeweiligen Boden horizontal führbar ist und die beiden Phasen durch Schwerkraftabscheidung trennbar sind, wobei die disperse Phase eine Oberfläche des jeweiligen Bodens benetzt, und wobei die kontinuierliche Phase im Abströmschacht nach unten in einen Sammelbereich für die kontinuierliche Phase absinken kann, wenn sie spezifisch schwerer ist als die disperse Phase oder nach oben in einen entsprechenden Sammelbereich des Kolonnensumpfes aufsteigen kann, wenn sie spezifisch leichter als die disperse Phase ist.

Weiterhin ist gemäß einer bevorzugten Ausführungsform der erfindungsgemäßen Waschkolonne vorgesehen, dass das mindestens eine Rohr des jeweiligen Bodens als ein Steigrohr ausgebildet ist und sich ausgehend von einer Öffnung des jeweiligen Bodens, mit der es in Strömungsverbindung steht, entlang der Längsachse nach oben hin zu dem jeweils benachbarten Boden erstreckt, wo es mit einer oberen Öffnung, die dem benachbarten Boden zugewandt ist, unterhalb des benachbarten Bodens endet, so dass eine disperse Phase, die spezifisch leichter ist als die kontinuierliche Phase, in dem jeweiligen Steigrohr nach oben zum benachbarten Boden aufsteigen kann.

Es können natürlich pro Boden auch mehrere Rohre vorgesehen sein (siehe oben). In diesem Fall ist gemäß einer Ausführungsform vorgesehen, dass die Rohre des jeweiligen Bodens als Steigrohre ausgebildet sind und sich ausgehend von je einer Öffnung des jeweiligen Bodens, mit der das jeweilige Steigrohr in Strömungsverbindung steht, entlang der Längsachse nach oben hin zu dem jeweils benachbarten Boden erstrecken, wo sie mit je einer oberen Öffnung, die dem benachbarten Boden zugewandt ist, unterhalb des benachbarten Bodens enden, so dass eine disperse Phase, die spezifisch leichter ist als die kontinuierliche Phase, in den Steigrohren jeweils nach oben zum benachbarten Boden aufsteigen kann.

In den Ausführungsformen mit Steigrohren wird die disperse Phase insbesondere durch Kohlenwasserstoffe des kohlenwasserstoffhaltigen Stromes gebildet, wobei die wässrige Phase durch das Waschmittel gebildet wird. Das mit den Kohlenwasserstoffen beladene Waschmittel bildet hier also die Emulsion, die es zu trennen gilt.

Die Flüssigkeits- bzw. Kohlenwasserstofftröpfchen der spezifisch leichteren dispersen Phase lagern sich beim Durchlaufen des jeweiligen Bodens an einer nach unten gewandten Oberfläche bzw. Unterseite des jeweiligen Bodens an, verbinden sich miteinander und bilden u. U. einen geschlossenen Film, der dann über das jeweilige Steigrohr bzw. die jeweiligen Steigrohre zum nächsten Boden nach oben weitergeführt wird.

Die besagten Steigrohre gehen vorzugsweise von einem Endabschnitt des jeweiligen Bodens ab, der jeweils näher am Abströmschacht gelegen ist als am Einströmschacht, so dass sich die beiden Phasen zunächst trennen können bevor die besagte spezifisch leichtere disperse Phase über die Steigrohre nach oben weitergegeben wird.

Weiterhin ist gemäß einer bevorzugten Ausführungsform der erfindungsgemäßen Waschkolonne vorgesehen, dass die obere Öffnung des jeweiligen mindestens einen Steigrohres mit der Öffnung des nach oben hin benachbarten Bodens fluchtet, mit der das mindestens eine Steigrohr des nach oben hin benachbarten Bodens in Strömungsverbindung steht bzw. von der aus das mindestens eine Steigrohr des nach oben hin benachbarten Bodens sich nach oben zum nächsten Boden erstreckt.

Sind pro Boden mehrere Steigrohre vorhanden, ist gemäß einer Ausführungsform entsprechend vorgesehen, dass die obere Öffnung des jeweiligen Steigrohres mit einer Öffnung des nach oben hin benachbarten Bodens fluchtet, mit der ein Steigrohr des nach oben hin benachbarten Bodens in Strömungsverbindung steht bzw. von der aus ein Steigrohr des nach oben hin benachbarten Bodens sich nach oben zum nächsten Boden erstreckt.

Weiterhin ist gemäß einer bevorzugten Ausführungsform der erfindungsgemäßen Waschkolonne vorgesehen, dass oberhalb eines obersten Bodens, der insbesondere zumindest ein Steigrohr oder mehrere Steigrohre aufweist, eine Kammer zum Sammeln einer dispersen Phase vorgesehen ist, die spezifisch leichter ist als die kontinuierliche Phase, wobei am Mantel lateral ein Auslass vorgesehen ist (z.B. ein Stutzen am Mantel), über den die disperse Phase aus der Kammer abziehbar ist.

Weiterhin ist gemäß einer bevorzugten Ausführungsform der erfindungsgemäßen Waschkolonne vorgesehen, dass zum Abziehen einer kontinuierlichen Phase, die spezifisch schwerer ist als die disperse Phase, unterhalb des untersten Bodens ein Sammelbereich zum Sammeln der kontinuierlichen Phase sowie ein Auslass des Sammelbereiches zum Abziehen der kontinuierlichen Phase aus dem Sammelbereich am Mantel vorgesehen ist. Dieser Auslass kann wiederum mit dem Mantelraum der Waschkolonne solchermaßen in Strömungsverbindung stehen, dass die abgetrennte kontinuierliche Phase als Bestandteil des Waschmittels im Kreislauf bzw. wieder in den Mantelraum zurückführbar ist.

Weiterhin ist gemäß einer bevorzugten Ausführungsform der erfindungsgemäßen Waschkolonne vorgesehen, dass die Böden auf der Seite des Abströmschachts jeweils eine von einem Rand des jeweiligen Bodens nach unten abragende Wandung zum Rückhalten bzw. Aufstauen der spezifisch leichteren dispersen Phase aufweisen.

Weiterhin ist gemäß einer bevorzugten Ausführungsform der erfindungsgemäßen Waschkolonne vorgesehen, dass die besagte Kammer von einem in Richtung der Längsachse darüber angeordneten Abschnitt des Mantelraumes durch eine Decke getrennt ist, die z.B. durch ein oder mehrere Deckbleche gebildet ist.

Weiterhin ist gemäß einer bevorzugten Ausführungsform der erfindungsgemäßen Waschkolonne vorgesehen, dass die besagte Decke zum Einleiten der zu trennenden Emulsion bzw. des beladenen Waschmittels in den Sumpf der Waschkolonne an einer Innenseite des Mantels eine Öffnung zum Einlaufschacht aufweist.

Weiterhin ist gemäß einer bevorzugten Ausführungsform der erfindungsgemäßen Waschkolonne vorgesehen, dass die Decke zu dieser Öffnung hin abfällt.

Für den Fall, dass die disperse Phase spezifisch schwerer als die kontinuierliche Phase ist, ist gemäß einer alternativen Variante der erfindungsgemäßen Waschkolonne vorgesehen, dass das Rohr des jeweiligen Bodens als ein Fallrohr ausgebildet ist und sich ausgehend von einer Öffnung des jeweiligen Bodens, mit der es in Strömungsverbindung steht, entlang der Längsachse nach unten hin zu dem jeweils benachbarten Boden erstreckt, wo es mit einer unteren Öffnung, die dem benachbarten Boden zugewandt ist, oberhalb des benachbarten Bodens endet, so dass die spezifisch schwerere disperse Phase in den Fallrohren jeweils nach unten zum benachbarten Boden absinken kann.

Bei mehreren Rohren pro Boden ist gemäß einer Ausführungsform entsprechend vorgesehen, dass die Rohre des jeweiligen Bodens als Fallrohre ausgebildet sind und sich jeweils ausgehend von einer Öffnung des jeweiligen Bodens, mit der das jeweilige Fallrohr in Strömungsverbindung steht, entlang der Längsachse nach unten hin zu dem jeweils benachbarten Boden erstrecken, wo sie jeweils mit einer unteren Öffnung, die dem benachbarten Boden zugewandt ist, oberhalb des benachbarten Bodens enden, so dass die spezifisch schwerere disperse Phase in den Fallrohren jeweils nach unten zum benachbarten Boden absinken kann.

Die Flüssigkeitströpfchen der spezifisch schwereren dispersen Phase lagern sich beim Durchlaufen des jeweiligen Bodens an einer nach oben gewandten Oberfläche bzw. Oberseite des jeweiligen Bodens an, verbinden sich miteinander und bilden u. U. einen geschlossenen Film, der dann über das jeweilige Fallrohr zum nächsten Boden nach unten weitergeführt wird.

Die besagten Fallrohre gehen vorzugsweise von einem Endabschnitt des jeweiligen Bodens ab, der jeweils näher am Abströmschacht gelegen ist als am Einströmschacht, so dass sich die beiden Phasen zunächst trennen können bevor die besagte spezifisch schwerere disperse Phase über die Fallrohre nach unten weitergegeben wird.

Gemäß einer bevorzugten Ausführungsform der erfindungsgemäßen Waschkolonne ist wiederum vorgesehen, dass die untere Öffnung des jeweiligen mindestens einen Fallrohres mit der Öffnung des nach unten hin benachbarten Bodens fluchtet, mit der das mindestens eine Fallrohr des nach unten hin benachbarten Bodens in Strömungsverbindung steht bzw. von der aus das mindestens eine Fallrohr des nach unten hin benachbarten Bodens sich nach unten zum nächsten Boden erstreckt.

Für den Fall, dass pro Boden mehrere Fallrohre vorgesehen sind, ist gemäß einer Ausführungsform entsprechend vorgesehen, dass die unteren Öffnungen der jeweiligen Fallrohre mit je einer Öffnung des nach unten hin benachbarten Bodens fluchten, mit der ein Fallrohr des nach unten hin benachbarten Bodens in Strömungsverbindung steht bzw. von der aus ein Fallrohr des nach unten hin benachbarten Bodens sich nach unten zum nächsten Boden erstreckt.

Weiterhin kann nunmehr eine Kammer zum Sammeln der spezifisch schwereren dispersen Phase im unteren Abschnitt des Sumpfes vorgesehen sein, aus der die disperse Phase abziehbar ist.

Insbesondere für den Fall, dass es sich bei dem Waschmittel um eine Lauge handelt, ist vorgesehen, dass die Emulsion bzw. das mit Kohlenwasserstoffen beladene Waschmittel durch ein in den Einlaufschacht hineinstehendes Fallrohr in den Sumpf eingeleitet und dort auf die Böden aufgeteilt wird.

Alle Böden der erfindungsgemäßen Waschkolonne sind vorzugsweise horizontal und parallel zueinander ausgerichtet, wobei der Abstand zwischen den Böden vorzugsweise konstant ist (d.h. der vertikale Abstand je zweier benachbarter Böden ist konstant).

Weiterhin ist gemäß einer Ausführungsform vorgesehen, dass je zwei benachbarte Böden entlang der Längsachse einen Abstand aufweisen, der im Bereich von 0,3 m bis 1,0m liegt, bevorzugt im Bereich von 0,4 m bis 0,6m.

Weiterhin wird die erfindungsgemäße Aufgabe gemäß Anspruch 15 verfahrensseitig durch ein Verfahren zum Trennen eines aus einer dispersen Phase und einer kontinuierliche Phase bestehenden Emulsion gelöst, die in einer Waschkolonne beim Waschen eines kohlenwasserstoffhaltigen Stroms mittels eines wässrigen Waschmittels entsteht, wobei bevorzugt eine erfindungsgemäße Waschkolonne verwendet wird, und wobei die Emulsion bzw. das mit Kohlenwasserstoffen beladene Waschmittel in einen Sumpf der Waschkolonne eingeleitet wird und dort auf horizontal erstreckte sowie übereinander angeordnete Böden aufgeteilt wird und in horizontaler Richtung auf den Böden geführt wird, so dass die beiden Phasen auf den Böden durch Schwerkraftabscheidung getrennt werden.

Eine bevorzugte Ausgestaltung des erfindungsgemäßen Verfahrens sieht vor, dass die Emulsion über ein Rohr, dessen unteres Ende offen ist und das unterhalb des Flüssigkeitspiegels endet, oder über den besagten Einströmschacht, nahe an der Außenwand der Kolonne in den Sumpf eingeleitet und anschließend zwischen den Böden horizontal geführt wird, wobei freie Querschnitte zwischen den Böden vollständig mit Flüssigkeit gefüllt sind.

Auf den horizontal verlaufenden Wegabschnitten der Böden wird die zu trennende Emulsion zweckmäßigerweise bevorzugt mit Geschwindigkeiten geführt, die so gering sind, dass die Zeit, die das Flüssigkeitsgemisch benötigt, um die horizontal verlaufenden Wegabschnitte zu durchströmen, länger ist, als die Zeit, die für die Trennung der beiden Flüssigphasen notwendig ist. Auf diese Weise entmischen sich die beiden Flüssigkeitsphasen insbesondere vollständig und werden am Ende der horizontal verlaufenden Wegabschnitte bzw. am Ende der Böden als getrennte Phasen weitergeführt, wobei die disperse Phase bevorzugt über die besagten Steigrohre oder Fallrohre jeweils zum nächsten Boden weitergeleitet wird (auch hier können pro Boden eines oder mehrere Streigrohre bzw. Fallrohre vorgesehen sein), um letztlich in die besagte Kammer der Waschkolonne (siehe oben) eingeleitet zu werden, von wo aus die disperse Phase aus der Kolonne abgezogen wird, und wobei die kontinuierliche Phase über den Abströmschacht bevorzugt einem Sammelbereich des Sumpfes zugeführt wird, über den sie aus der Kolonne abgezogen wird.

Weitere Merkmale und Vorteile der erfindungsgemäßen Waschkolonne bzw. des erfindungsgemäßen Verfahrens sollen nachfolgend anhand der Figurenbeschreibungen von bevorzugten Ausführungsbeispielen aufgezeigt werden.

Es zeigen:
- Fig. 1: eine Waschkolonne nach dem Stand der Technik (siehe oben);
- Fig. 2: eine schematische Schnittansicht einer erfindungsgemäßen Waschkolonne zum Waschen eines kohlenwasserstoffhaltigen Stromes mit einem wässrigen Waschmittel, das eine Lauge enthält;
- Fig. 3: eine schematische Schnittansicht einer erfindungsgemäßen Waschkolonne zur Wasserwäsche eines kohlenwasserstoffhaltigen Stromes; und
- Fig. 4: eine Ausgestaltung der von den Dekanterböden gemäß Figuren 2 und 3 abgehenden Rohre für den Fall, dass die disperse Phase schwerer ist als die kontinuierliche Phase.

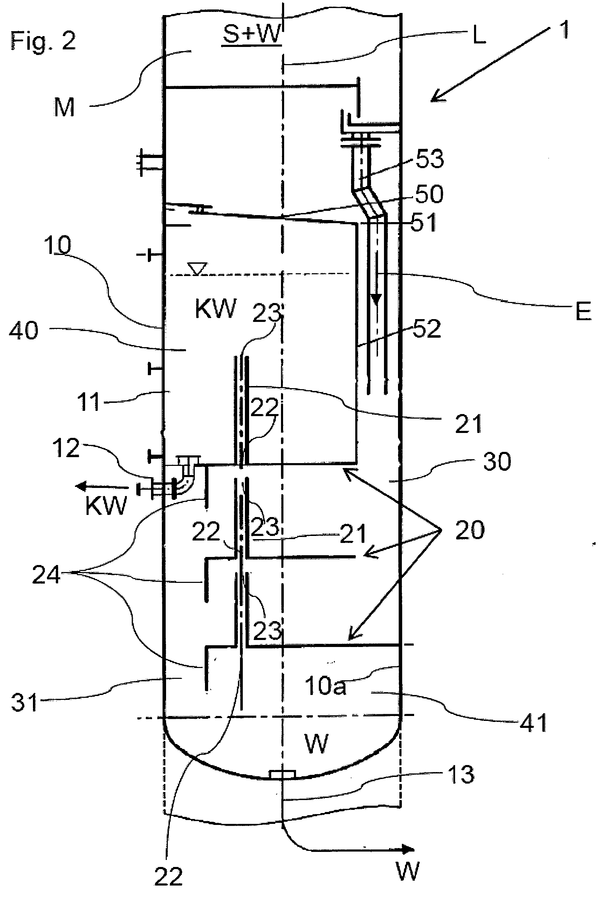

Fig. 2 zeigt eine Ausführungsform einer erfindungsgemäßen Waschkolonne 1 zum Waschen eines kohlenwasserstoffhaltigen Stoffstromes S mittels eines wässrigen Waschmittels W, bei dem es sich vorliegend um eine Lauge handelt (siehe auch oben).

Gemäß Figur 2 weist die Waschkolonne 1 einem Mantel 10 auf, der sich entlang einer vertikal ausgerichteten Längsachse L erstreckt, wobei der Mantel 10 abschnittsweise zylindersymmetrisch ausgebildet sein kann, so dass es sich bei der Längsachse L entsprechend um eine Zylinderachse handelt. Der Mantel 10 weist ferner eine umlaufende, dem Mantelraum M zugwandte Innenseite 10 auf.

Der Mantel 10 definiert des Weiteren einen Mantelraum M der Waschkolonne 1, die in dem in der Figur 2 gezeigten unteren Abschnitt der Waschkolonne 1 einen Sumpf 11 aufweist, der zur Aufnahme einer bei der Laugenwäsche entstehenden Emulsion E dient. Bei dieser Emulsion handelt es sich um das mit Kohlenwasserstoffen KW beladene Waschmittel W. Hierbei bilden bei dem vorliegenden Beispiel die Kohlenwasserstoffe KW die disperse Phase der Emulsion, während die wässrige Phase bzw. das Waschmittel W die kontinuierliche Phase bildet.

Um diese Emulsion E bzw. die beiden Phasen KW und W trennen zu können, so dass insbesondere die wässrige Phase W wieder in den Mantelraum M zurückgeführt werden kann und somit im Kreislauf gefahren werden kann, sind im Sumpf 11 der Waschkolonne 1 mehrere parallele Böden 20 angeordnet, die auch als Dekanterböden bezeichnet werden.

Die einzelnen Böden 20 sind in vertikaler Richtung übereinander angeordnet und erstrecken sich dabei jeweils parallel zueinander in horizontaler Richtung, d.h., quer zur Längsachse L im Sumpf 11 der Waschkolonne 1, wobei sie sich jeweils von einem vertikal verlaufenden sowie an die Innenseite 10a des Mantels 10 angrenzenden Einströmschacht 30 zu einem dem Einströmschacht 30 gegenüberliegenden Abströmschacht 31 erstrecken, der ebenfalls vertikal verläuft und an die besagte Innenseite 10a angrenzt.

In einem näher zum Abströmschacht gelegenen Endabschnitt des jeweiligen Bodens 20 sind Öffnungen 22 des jeweiligen Bodens 20 ausgebildet, wobei die jeweilige Öffnung 22 mit einem Steigrohr 21 verbunden ist, das entlang der Längsachse L vom jeweiligen Boden 20 nach oben abgeht, wobei eine obere Öffnung 23 des jeweiligen Steigrohres 21 mit einer Öffnung 22 des jeweils nach oben hin benachbarten Bodens 20 fluchtet und dieser zugewandt ist.

Über den Einströmschacht 30 kann somit die Emulsion E in Teilströme aufgeteilt werden, die dann entlang der einzelnen Böden 20 in horizontaler Richtung geführt werden, wobei die spezifisch leichtere disperse Phase KW nach oben aufsteigt, sich an einer Unterseite des jeweiligen Bodens 20 sammelt und über die Öffnungen 22 des jeweiligen Bodens 20 sowie die sich anschließenden Steigrohre 21 zum darüber liegenden Boden 20 weitergegeben wird. Damit die disperse Phase KW nicht in den Abströmschacht 31 gelangen kann, ist am Ende des jeweiligen Bodens 20 eine Wandung 24 vorgesehen, die entlang der Längsachse L nach unten vom jeweiligen Boden abgeht und daher die disperse Phase am Ende des jeweiligen Bodens zurückhalten bzw. aufstauen kann.

Zum Sammeln der disperse Phase KW ist oberhalb eines obersten Dekanterbodens 20 eine Kammer 40 vorgesehen, in die das oberste Steigrohr 21 mit seiner oberen Öffnung 23 hinein steht. Zum Ablassen der disperse Phase KW aus dieser Kammer 40 ist am Mantel 10 lateral ein Auslass 12 ausgebildet, zum Beispiel in Form eines Stutzens, der mit der besagten Kammer 40 in Strömungsverbindung steht, sodass die disperse Phase KW über diesen Auslass 12 aus der Kammer 40 abziehbar ist.

Nach oben hin wird die Kammer 40 von einer Decke 50 begrenzt, die zu einer Öffnung des Einströmschachtes 53 hin, die angrenzend an die Innenseite 10a des Mantels 10 angeordnet ist, abfällt. Zum Einströmschacht 30 hin wird die Kammer 40 ferner durch eine Wand 52 begrenzt, die sich ausgehend von einem Rand der Decke 50 zum obersten Boden 20 erstreckt. In der Decke 50 ist weiterhin bevorzugt eine Entlüftung nach oben vorgesehen, die zum Druckausgleich zwischen der Kammer 40 und der Kolonne dient.

In den Einströmschacht 30 steht entlang der Längsachse L ein Fallrohr 53 hinein, über das die bei der Laugenwäsche des kohlenwasserstoffhaltigen Stoffstromes S entstehende Emulsion E aus einem oberhalb des Sumpfes 11 gelegenen Abschnitt der Waschkolonne 1 in den Sumpf 11 geleitet wird.

Im Gegensatz zur spezifisch leichteren dispersen Phase KW sinkt die kontinuierliche wässrige Phase W ausgehend vom jeweiligen Boden 20 im Abströmschacht 31 entlang der Längsachse L nach unten in einen untersten Abschnitt des Sumpfes bzw. Sammelbereich 41 des Sumpfes 11, aus dem die kontinuierliche bzw. wässrige Phase W über einen Auslass 13 abgezogen wird, der z.B. in Form eines Stutzens am Boden des Mantels 10 vorgesehen ist, und (gegebenenfalls zusammen mit frischem Waschmittel W) wieder in den Mantelraum M der Waschkolonne 1 zurückgeführt wird.

In den Sammelbereich 41 kann die kontinuierliche Phase lediglich über den Abströmschacht 31 gelangen. Hierzu ist der unterste Boden 20 unterhalb des Einströmschachtes 30 bis zur Innenseite 10a des Mantels 10 durchgezogen, sodass der unterste Boden 20 die Sektion des Einströmschachts 30 nach unten hin begrenzt.

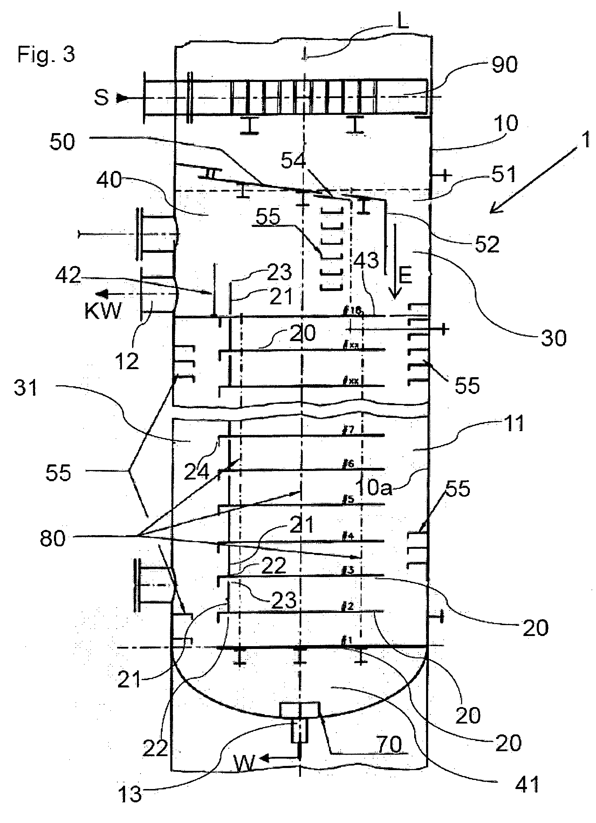

Fig. 3 zeigt eine weitere erfindungsgemäße Waschkolonne 1, die zur Wasserwäsche eines kohlenwasserstoffhaltigen Stoffstromes S ausgelegt ist. Bei der Wasserwäsche des kohlenwasserstoffhaltigen Stromes S in der Waschkolonne 1 entsteht wiederum eine Emulsion E, bei der die disperse Phase KW durch Kohlenwasserstoffe des Stromes S und die kontinuierliche Phase W durch das Waschmittel, hier Wasser, gebildet wird.

Gemäß Fig. 3 sind, wie zuvor anhand von Fig. 2 beschrieben, die Dekanterböden 20 parallel zueinander sowie übereinander im Sumpf 11 der Kolonne 1 angeordnet, wobei wiederum der unterste Boden 20 unterhalb des Einströmschachtes zur Innenseite 10a des Mantels 10 durchgezogen ist und den Einströmschacht nach unten hin begrenzt. Gleichzeitig wird hierdurch ein Sammelbereich 41 im untersten Abschnitt des Sumpfes 11 geschaffen, in dem die kontinuierliche Phase W gesammelt wird, wobei diese über den Abströmschacht 31 in den besagten Sammelbereich 41 gelangt. Um Wirbel der kontinuierlichen bzw. wässrigen Phase W beim Abziehen dieser Phase W aus dem Sammelbereich 41 zu vermeiden, ist an einem Auslass 13, der an einem Boden des Mantels 10 vorgesehen ist, einen Wirbelbrecher 70 angeordnet. Über den Auslass 13 kann die wässrige Phase W wiederum im Kreislauf in den Mantelraum M zurückgeführt werden, um dort als Bestandteil des Waschmittels W den kohlenwasserstoffhaltigen Strom S zu beaufschlagen.

Wie zuvor im Zusammenhang mit Figur 2 beschrieben, münden die Steigrohre 21 des obersten Dekanterbodens 20 mit ihrer oberen Öffnung 23 in eine Kammer 40 zum Sammeln der dispersen Phase KW, wobei hier im Unterschied zur Figur 2 die Wandung 52, die die Kammer 40 zum Einströmschacht 30 hin begrenzt, nicht bis zu einem Boden 43 der Kammer 40 durchgezogen ist, so dass die Emulsion E über den Einströmschacht 30 auch auf den Boden der Kammer 40 gelangen kann. Oberhalb des Abströmschachtes 31 ist daher in der Kammer 40 eine vom Boden 43 der Kammer 40 abgehende Trennwand 42 vorgesehen, die dazu ausgebildet ist, die wässrige Phase W zurückzuhalten, so dass lediglich oder mehrheitlich die disperse Phase KW über die Trennwand 42 hinweg zu einem Auslass 12 der Kammer 40 gelangen kann, der zum Beispiel in Form eines Stutzens lateral am Mantel 10 vorgesehen ist. Über diesen Auslass 12 kann die disperse Phase KW gegebenenfalls zusammen mit einem Anteil der wässrigen Phase W aus der Kammer 40 abgezogen werden.

Nach oben hin ist die Kammer 40 wiederum durch eine Decke 50 begrenzt, die zu einer Öffnung 51 des Einstellungsschachtes 30 hin abfällt. Die Decke 50 weist dabei insbesondere eine verschließbare Öffnung 54 auf, die in Form eines Mannloches ausgebildet ist, so das Wartungspersonal zu Wartungszwecken über das Mannloch 54 sowie entsprechende Leitern 55 den Sumpf 11 der Kolonne 1 begehen kann. Weiterhin ist bevorzugt eine Entlüftung zum Druckausgleich zwischen der Kammer 40 und der Kolonne vorgesehen.

Weiterhin sind bevorzugt Stützen 80 vorgesehen, die zwischen den Böden 20 verlaufen und die Last dieser Böden 20 nach unten abtragen.

Schließlich ist oberhalb der Decke 50 der Kammer 40 ein Verteiler 90 vorgesehen, über den der kohlenwasserstoffhaltige Strom S in den Mantelraum M einleitbar ist, so dass er im Gegenstrom mit der wässrigen Phase W bzw. dem Waschmittel W beaufschlagbar ist.

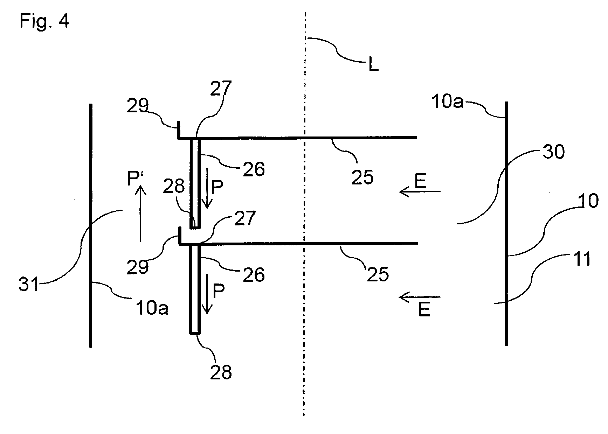

Fig. 4 zeigt eine Abwandlung der in den Figuren 2 und 3 gezeigten Dekanterböden 20 (hier als Böden 25 bezeichnet), die dazu ausgebildet sind, eine disperse Phase P, die spezifisch schwerer ist als die kontinuierliche Phase P' einer Emulsion E im Sumpf 11 nach unten zu leiten.

Hierzu sind die jeweiligen Rohre 26 eines Dekanterbodens 25 als Fallrohre ausgebildet und erstrecken sich ausgehend von je einer zugeordneten Öffnung 27 des jeweiligen Bodens 25, mit der das jeweilige Fallrohr in Strömungsverbindung steht, entlang der Längsachse L des Mantels 10 der Kolonne 1 nach unten hin zu dem jeweils benachbarten Boden 25, wo sie mit je einer unteren Öffnung 28, die dem (nach unten hin) benachbarten Boden 25 zugewandt sind, oberhalb des benachbarten Bodens 25 enden, so dass die disperse Phase P in den Fallrohren 26 jeweils nach unten zum benachbarten Boden 25 absinken kann.

Hierbei ist wiederum vorgesehen, dass die unteren Öffnungen 28 der jeweiligen Fallrohre 26 jeweils mit einer Öffnung 27 des nach unten hin benachbarten Bodens 25 fluchten, wobei die Fallrohre 26 des nach unten hin benachbarten Bodens 25 mit diesen Öffnungen 27 in Strömungsverbindung stehen. An den benachbart zum Abströmschacht 31 gelegenen Enden der Böden 25 gehen vorzugsweise Wandungen 29 nach oben ab, die die disperse Phase P zurückhalten und verhindern, dass diese in den Abströmschacht 31 gelangt.

**Bezugszeichenliste**

| | |
|---|---|
| 1 | Waschkolonne |
| 10 | Mantel |
| 10a | Innenseite |
| 11 | Sumpf |
| 12, 13 | Auslass |
| 20, 25 | Boden |
| 21, 26 | Rohr |
| 22, 23, 27, 28 | Öffnung |
| 24, 29 | Wandung |
| 30 | Einströmschacht |
| 31 | Abströmschacht |
| 40 | Kammer |
| 41 | Sammelbereich |
| 42, T | Trennwand |
| 43 | Boden |
| 50 | Decke |
| 51 | Öffnung |
| 52 | Wand |
| 53 | Fallrohr |
| 54 | Verschließbare Öffnung |
| 55 | Leiter |
| 70 | Wirbelbrecher |
| 80 | Stützen |
| 90 | Verteiler |
| E | Emulsion bzw. beladenes Waschmittel |
| F | Fallrohr |
| KW | Kohlenwasserstoffe (disperse Phase) |
| L | Längsachse |
| S | Kohlenwasserstoffhaltiger Strom |
| T1, T2 | Teilräume |
| W | Waschmittel (kontinuierliche Phase) |

## Patentansprüche

1. Waschkolonne (1) zum Waschen eines kohlenwasserstoffhaltigen Stroms (S) mittels eines wässrigen Waschmittels (W), mit:
- einem Mantel (10), der einen Mantelraum (M) zum Aufnehmen des kohlenwasserstoffhaltigen Stromes (S) und des Waschmittels (W) umgibt, wobei sich der Mantel (10) entlang einer vertikal verlaufenden Längsachse (L) erstreckt, und
- einem Sumpf (11) zur Aufnahme einer bei der Wäsche entstehenden Emulsion (E) aus einer dispersen und einer kontinuierlichen Phase (KW, W),
**dadurch gekennzeichnet,**
**dass** eine Mehrzahl an parallelen sowie senkrecht zur Längsachse (L) erstreckten Böden (20) zum Trennen der dispersen Phase von der kontinuierlichen Phase im Sumpf (11) angeordnet ist, wobei von jedem Boden (20) zumindest ein entlang der Längsachse (L) verlaufendes Rohr (21) abgeht, über das die disperse Phase vom jeweiligen Boden (20) zu einem benachbarten Boden (20) führbar ist.

2. Waschkolonne nach Anspruch 1, **dadurch gekennzeichnet, dass** die Böden (20) so übereinander angeordnet sind, dass sie sich jeweils von einem an eine Innenseite (10a) des Mantels (10) angrenzenden Einströmschacht (30) zum Einströmen der Emulsion (E) in den Sumpf (11) der Waschkolonne (1) zu einem gegenüberliegenden, an die Innenseite (10a) angrenzenden Abströmschacht (31) erstrecken, so dass die Emulsion (E) auf dem jeweiligen Boden (20) jeweils horizontal führbar ist und die beiden Phasen (KW, W) durch Schwerkraftabscheidung trennbar sind, wobei die kontinuierliche Phase im Abströmschacht (31) nach unten absinken kann, wenn sie spezifisch schwerer ist als die disperse Phase oder nach oben aufsteigen kann, wenn sie spezifisch leichter als die disperse Phase ist.

3. Waschkolonne nach Anspruch 1 oder 2, **dadurch gekennzeichnet, dass** das jeweilige mindestens eine Rohr (21) als ein Steigrohr ausgebildet ist und sich ausgehend von einer Öffnung (22) des jeweiligen Bodens (20), mit der es in Strömungsverbindung steht, entlang der Längsachse (L) nach oben hin zu dem jeweils benachbarten Boden (20) erstreckt, wo es mit einer oberen Öffnung (23), die dem benachbarten Boden (20) zugewandt ist, unterhalb des benachbarten Bodens (20) endet, so dass eine disperse Phase (KW), die spezifisch leichter ist als die kontinuierliche Phase (W), in den Steigrohren (21) jeweils nach oben zum benachbarten Boden (20) aufsteigen kann.

4. Waschkolonnen nach Anspruch 3, **dadurch gekennzeichnet, dass** die obere Öffnung (23) des jeweiligen mindestens einen Steigrohres (21) mit der Öffnung (22) des nach oben hin benachbarten Bodens (20) fluchtet, mit der das mindestens eine Steigrohr (21) des nach oben hin benachbarten Bodens (20) in Strömungsverbindung steht.

5. Waschkolonne nach einem der vorhergehenden Ansprüche, **dadurch gekennzeichnet, dass** oberhalb eines obersten Bodens (20) der Böden (20) eine Kammer (40) zum Sammeln einer dispersen Phase (KW) vorgesehen ist, die spezifisch leichter ist als die kontinuierliche Phase (W), wobei am Mantel (10) lateral ein Auslass (12) vorgesehen ist, über den die disperse Phase (KW) aus der Kammer (40) abziehbar ist.

6. Waschkolonne nach einem der vorhergehenden Ansprüche, **dadurch gekennzeichnet, dass** zum Abziehen einer kontinuierlichen Phase (W), die spezifisch schwerer ist als die disperse Phase (KW) unterhalb des untersten Bodens (20) ein Auslass (13) zum Abziehen der kontinuierlichen Phase (W) aus dem Sumpf (11) am Mantel (10) vorgesehen ist.

7. Waschkolonne nach Anspruch 2 oder einem der Ansprüche 3 bis 6 soweit rückbezogen auf Anspruch 2, **dadurch gekennzeichnet, dass** die Böden (20) auf der Seite des Abströmschachts (31) jeweils eine von einem Rand des jeweiligen Bodens (20) nach unten abragende Wandung (24) zum Rückhalten einer dispersen Phase (KW) aufweisen, die spezifisch leichter ist als die kontinuierliche Phase (W).

8. Waschkolonne nach Anspruch 5 oder einem der Ansprüche 6 bis 7 soweit rückbezogen auf Anspruch 5, **dadurch gekennzeichnet, dass** die Kammer (40) von einem in Richtung der Längsachse (L) darüber angeordneten Abschnitt des Mantelraumes (M) durch eine Decke (50) getrennt ist.

9. Waschkolonne nach den Ansprüchen 2 und 8, **dadurch gekennzeichnet, dass** die Decke (50) eine an einer Innenseite (10a) des Mantels (10) eine Öffnung (51) zum Einlaufschacht (30) aufweist.

10. Waschkolonne nach Anspruch 9, **dadurch gekennzeichnet, dass** die Decke (50) zur Öffnung (51) hin abfällt.

11. Waschkolonne nach Anspruch 1 oder 2, **dadurch gekennzeichnet, dass** das jeweilige mindestens eine Rohr (26) als ein Fallrohr ausgebildet ist und sich ausgehend von einer Öffnung (27) des jeweiligen Bodens (25), mit der es in Strömungsverbindung steht, entlang der Längsachse (L) nach unten hin zu dem jeweils benachbarten Boden (25) erstreckt, wo es mit einer unteren Öffnung (28), die dem benachbarten Boden (25) zugewandt ist, oberhalb des benachbarten Bodens (25) endet, so dass eine disperse Phase (P), die spezifisch schwerer ist als die kontinuierliche Phase (P'), in den Fallrohren (26) jeweils nach unten zum benachbarten Boden (25) absinken kann.

12. Waschkolonnen nach Anspruch 11, **dadurch gekennzeichnet, dass** die untere Öffnung (28) des jeweiligen mindestens einen Fallrohres (26) mit der Öffnung (27) des nach unten hin benachbarten Bodens (25) fluchtet, mit der das mindestens eine Fallrohr (26) des nach unten hin benachbarten Bodens (25) in Strömungsverbindung steht.

13. Waschkolonne nach einem der vorhergehenden Ansprüche, **dadurch gekennzeichnet, dass** die Waschkolonne (1) zum Einleiten der Emulsion (E) in den Sumpf (11) der Waschkolonne (1) ein in den Einlaufschacht (30) hinein stehendes Fallrohr (53) aufweist.

14. Vorrichtung nach einem der vorhergehenden Ansprüche, **dadurch gekennzeichnet, dass** je zwei benachbarte Böden (20) entlang der Längsachse einen Abstand aufweisen, der im Bereich von 0,3 m bis 1,0m liegt, bevorzugt im Bereich von 0,4 m bis 0,6m.

15. Verfahren zur Trennung eines aus einer dispersen Phase und einer kontinuierliche Phase bestehenden Emulsion (E), die in einer Waschkolonne beim Waschen eines kohlenwasserstoffhaltigen Stroms (S) mittels eines wässrigen Waschmittels (W) entsteht, wobei insbesondere eine Waschkolonne (1) nach einem der vorhergehenden Ansprüche verwendet wird, wobei die Emulsion (E) in einen Sumpf (11) der Waschkolonne (1) eingeleitet wird und dort auf horizontal erstreckte sowie übereinander angeordnete Böden (20) aufgeteilt wird und in horizontaler Richtung auf den Böden (20) geführt wird, so dass die beiden Phasen (EK, W) der Emulsion (E) auf den Böden (20) durch Schwerkraftabscheidung getrennt werden.
